# EUROPEAN PATENT SPECIFICATION

(11) **EP 1 694 034 B1**
(45) Date of publication and mention of the grant of the patent: **21.05.2014**
(21) Application number: 05290348.1
(22) Date of filing: 16.02.2005
(51) Int. Cl.: H04L 29/12

(54) **Method to establish a peer-to-peer connection between two user agents located behind symmetric NATs**
Methode zum Aufbau einer Peer-to-Peer Verbindung zwischen zwei Benutzer-Agenten die hinter symmetrischen NATs angeordnet sind
Méthode pour établir une connection du type homologue entre deux agents d'utilisateur situé arrière de translateurs d'adresses de réseau symmetriques

(43) Date of publication of application: 23.08.2006
(73) Proprietor: Alcatel Lucent, 75007 Paris (FR)
(72) Inventor: Wahl, Stefan, 71701 Schwieberdingen (DE)
(74) Representative: Wetzel, Emmanuelle

(56) References cited:
- EP-A- 1 185 069
- WO-A-2004/088923
- US-A1- 2002 085 561
- US-A1- 2003 118 002
- US-A1- 2004 177 158
- J. ROSENBERG; R. MAHY; S. SEN: "NAT and Firewall Scenarios and Solutions for SIP" DRAFT-IETF-SIPPING-NAT-SCENARIOS-00.TXT, 24 June 2002 (2002-06-24), XP015003441 IETF, GENEVA
- STIEMERLING NEC H TSCHOFENIG SIEMENS M MARTIN NEC C AOUN NORTEL NETWORKS M: "NAT/Firewall NSIS Signaling Layer Protocol (NSLP)" IETF STANDARD-WORKING-DRAFT, INTERNET ENGINEERING TASK FORCE, IETF, CH, vol. nsis, no. 1, 16 February 2004 (2004-02-16), XP015024465 ISSN: 0000-0004

## Description

### Technical field:

The invention relates to a method to establish an Internet connection between a first and a second user agent optionally each one located behind a symmetric NAT, according to the specifying features of claim 1.

### Background of the invention:

Network Address Translation, NAT commonly is being used by many service providers and private individuals as a way to get around the problem of not having enough IP addresses. An enterprise may have a block of IP addresses assigned to them, but many more computers than the allocated IP addresses. Alternatively, an individual may have a DSL connection with one IP address, but want to have multiple computers hooked up to the Internet. NAT solves this problem by mapping internal addresses to external or public addresses. An internal IP-address:Port pair is mapped to an external IP-address:port pair, and whenever the NAT receives a packet with the external IP-address:Port pair, it knows how to reroute the packet back to the internal IP-address:Port pair.

There are four types of NATs known:
- full cone NAT
- restricted cone NAT
- port restricted cone NAT
- symmetric NAT.

A full cone NAT comprises a NAT table that stores temporary IP-address and port bindings. Each record in the NAT-table of a full cone NAT consists of the internal source IP-address of an internal device located on the private site of the NAT, the used internal source port and the assigned external source port on the Internet site of the NAT. Incoming packets from the Internet are allowed to get through the NAT if they are addressed to the external source port of the NAT. New entries within this NAT table are generated each time an outbound packet is sent to the public Internet. If incoming or outgoing packets do not refresh a NAT-table entry said entry will be withdrawn after a specified period of time. Thereby the full cone NAT accepts all incoming packets whose destination port matches an external source port comprised in any entry in the NAT table, independently from where the packet was sent.

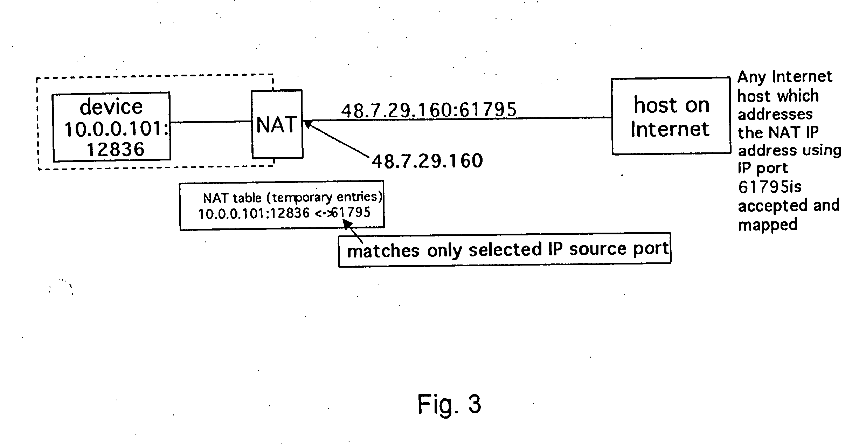

In Fig. 3, showing an example of a full cone NAT, any public Internet host which addresses the NAT and uses the external source port 61795 of the NAT as destination port is accepted by the NAT and the NAT will translate the destination IP-address:port pair to 10.0.0.101:12836.

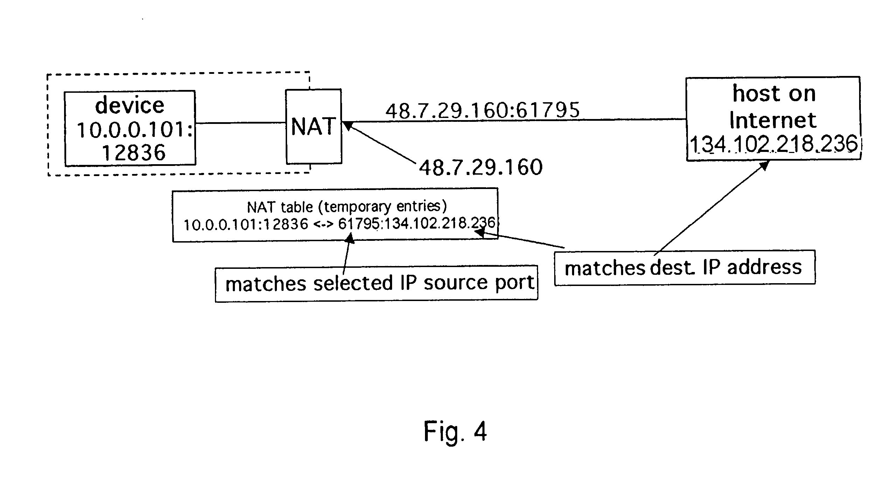

In contrast to the Full Cone NAT, a restricted cone NAT additionally uses a destination IP-address to identify inbound IP packets. Therefore, as shown in Fig. 4, the NAT table entry is extended by the public IP-address of a public Internet host. Restricted cone NATs use the external source IP-address and generate an external source port from the internal source IP-address and port, which means, that as long as those values do not change also the external source IP-address and port remains the same. If an application would use the same internal source port on the internal device to communicate with two different hosts on the public Internet, the external IP source port is exactly the same for both hosts, nevertheless two record entries are generated in the NAT table which differ only concerning the host IP addresses. However, the NAT will block packets coming from another host, until the client sends out a packet to said other hosts public IP-address. Once that is done, both hosts can send packets back to the same internal source port, and they will both have the same mapping through the NAT

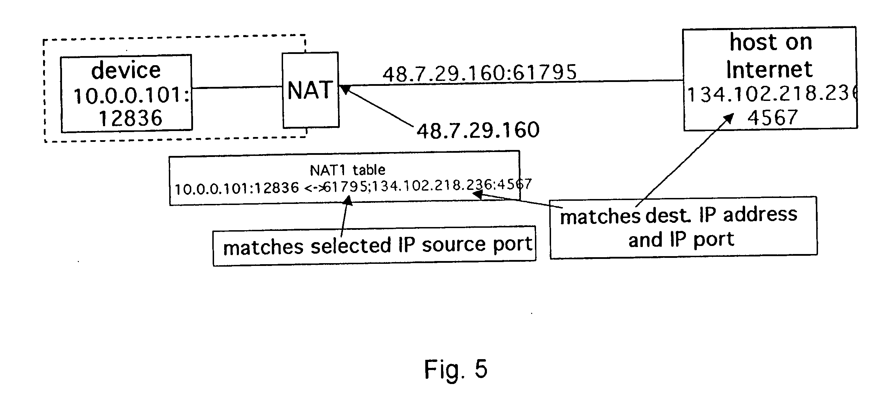

The port restricted cone NAT is a further extension of the restricted cone NAT wherein the NAT will block all packets unless the internal device had previously sent out a packet to the IP-address and port of the host that is sending to the NAT. The port restricted cone NAT performs the follow check for every incoming packet: First, it extracts the destination port and verifies whether there exists an valid entry in the NAT table. If there is no entry then the packet is dropped. In the other case, the NAT compares the host IP-address:port pair with the NAT table entries. If these values match, the NAT performs the IP-address and port translations and forwards the packet to the internal device. Otherwise the packet is dropped (Fig. 5). The external source port used by the NAT is always the same as long as the internal source IP-address and port remain the same. The NAT table could store further entries that differ only concerning the destination IP-address:port pair.

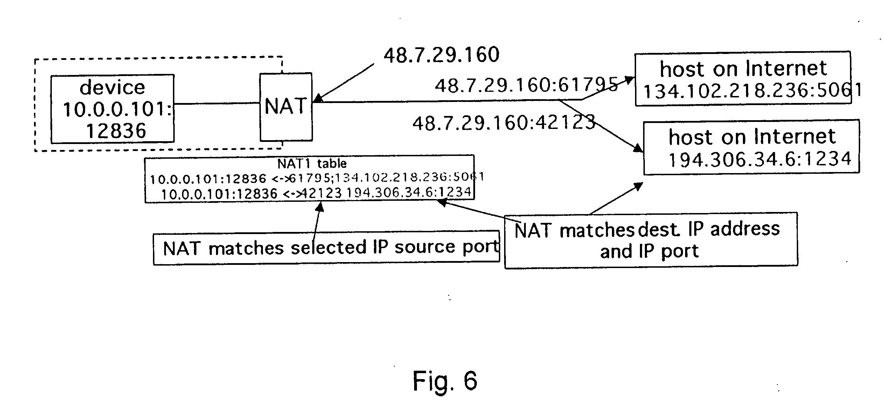

The behaviour of the symmetric NAT is almost the same as for the port restricted cone NAT. The difference is that a specific mapping of internal source IP-address:port pair to the NAT's external source IP-address:port pair is dependant on the destination IP-address:port pair that the packet is sent to. As soon as one of these four values changes, the symmetric NAT generates at least a new external source port and adds a further entry in the NAT table (Fig. 6). Due to the strategy described above, the devices behind a symmetric NAT are very well secured against any kind of unfriendly access. But a drawback arises from the strong blocking situation in case of e.g. connection set-ups using e.g. the Session Initialization Protocol, SIP. Applications to be used e.g. to establish a peer-to-peer connection to be used for telephone communication via the Internet typically use SIP signaling. Such applications are known as user agents. The SIP signaling protocol has to tell the peer the destination IP-address:port pair for the upcoming media session during the set up phase. But the external port used by the symmetric NAT cannot be determined in advance and the symmetric NAT will generate a NAT port out of the internal source IP-address:port pair of the device providing said user agent located behind the symmetric NAT and the destination IP-address:port pair at the very moment when the first packet is sent to the destination IP-address:port pair. If the other host is also shielded by a symmetric NAT, the worst case situation is reached.

To connect two user agents located behind symmetric NATs it is known to use relays located in the Internet. Such relays are adding a not negligible packet delay and are not scalable enough. Furthermore relays cut a peer-to-peer session into two sessions from relay to a first peer and from relay to a second peer. Moreover the relay involves functions above transport layer. Due to this, relays are not advantageous to be used e.g. to establish a connection between two user agents to be used for telephone calls via the Internet.

So up to now, no solution is known to peer-to-peer connect two user agents with each other when at least one is located behind a symmetric NAT.

Since today all kind of the described NATs are used, a potential solution should also be able to be used in combination with user agents not located behind NATs and also in combination with user agents located behind other NATs than symmetric NATs.

Such potential solutions are disclosed In the Internet Engineering Task Force Internet Draft "NAT and Firewall Scenarios and Solutions for SIP" , June, 2002. The problems of firewall and NAT traversal for SIP is classified as complex. This is due, in part, to the large number of different scenarios and the multitude of solutions developed to solve them. In this Internet Draft, various scenarios are enumerated which can arise, and for each, point to some of the existing solutions for that scenario are presented with call flows and explanations for how it works.

A further solution for the central allocation of addresses and port numbers has been introduced in International Publication Number WO 2004/088923 A1. In particular, the presented approach addresses the issue of connectivity between different address realms. An according method or system avoids address ambiguities by letting a gateway resource manager or equivalent central configuration server assign not only the address but also a source port number to use for each network communication.

### Technical purpose of the invention:

The technical purpose of the invention is to develop a method that allows establishing an Internet connection to be used to exchange data between two user agents, wherein at least one user agent can be located behind a symmetric NAT.

### Disclosure of the invention and its advantages:

The invention's technical purpose is fully met by the proposed method to establish an Internet connection like e.g. a session between a first and a second user agent wherein a NAT-table entry in a controllable NAT located in the Internet is generated, e.g. by a server or by the controllable NAT itself, wherein said NAT-table entry comprises public IP-address:Port pairs that are communicated to the user agents e.g. by the server, wherein the user agents use said public IP-address:port pairs for establishing an Internet connection between each other via the controllable NAT.

Thereby it is important to mention that the public IP-address:port pairs are generated and entered into the NAT-table of the controllable NAT before a communication between the user agents takes place. Said public IP-address:port pairs are used as destination addresses to which the user agents send their data to be exchanged with each other. Since the public IP-address:port pairs belong to the controllable NAT, the communication between the user agents takes place via the controllable NAT by performing only NAT layer functions.

Said Method with the specifying features of claim 1 has the advantage over the state of the art, that it allows to establish a connection between two user agents that can be located behind symmetric NATs. Thereby the controllable NAT preferably is a symmetric NAT since this increases the security of the connection between the two user agents. The controllable NAT is a simple component that must not be SIP aware and that translates IP-addresses and port according to the entry in the NAT-table. The end-to-end packet delay only increases negligible. The invention allows to place multiple controllable NATs within the Internet so that the load can be distributed. Thereby, in a first embodiment, wherein a server generates the public IP-address:Port pairs to be entered into the NAT-table, it is possible that only few or only one server can control many controllable NATs located in the Internet. In a second embodiment, the controllable NAT itself generates the public IP-address:Port pairs to be entered into the NAT-table and offers these public IP-address:Port pairs to requesting servers. Furthermore controllable NAT functions can easily be added e.g. into routers. The Method allows to establish any connection between two user agents to be used to exchange data.

A preferred embodiment of the invention comprises the steps of:
- registration of both user agents at a server,
- sending an invitation message to establish a connection with the second user agent from the first user agent to the server, wherein said invitation message comprises a first destination IP-address:Port pair to which the second user agent shall reply,
- generation of a NAT-table entry in a controllable NAT located in the Internet by the server, wherein said NAT-table entry comprises a first and a second public IP-address:Port pair,
- replacing the first destination IP-address:Port pair within the invitation message with the first public IP-address:Port pair by the server and
- sending the changed invitation message comprising the first public IP-address:Port pair from the server to the second user agent,
- receiving the changed invitation message from the server by the second user agent and extracting the first public IP-address:Port pair out of said invitation message,
- sending a confirmation message to establish the connection with the first user agent from the second user agent to the server, wherein said confirmation comprises a second destination IP-address:Port pair to which the first user agent shall reply,
- replacing the second destination IP-address:Port pair within the confirmation message with the second public IP-address:Port pair by the server and
- sending the changed confirmation message comprising the second public IP-address:Port pair from the server to the first user agent and
- receiving the changed confirmation message from the server by the first user agent and extracting the second public IP-address:Port pair out of said confirmation message,
- exchanging data between the first and the second user agent via the controllable NAT, wherein the first user agent addresses the data to be sent to the second user agent to the second public IP-address:Port pair extracted out of the confirmation message and wherein the second user agent addresses the data to be sent to the first user agent to the first public IP-address:Port pair extracted out of the invitation message, and
- completing the NAT-table entry of the controllable NAT by extracting a first source IP-address:Port pair from the very first data sent from the first user agent to the second user agent via the controllable NAT and a second source IP-address:Port pair from the very first data sent from the second user agent to the first user agent via the controllable NAT and inserting the first and the second source IP-address:Port pair into the NAT-table entry of the controllable NAT.

In a preferred embodiment of said invention, after receiving the confirmation message from the second user agent the server adds a first source IP-address of the first user agent comprised in the invitation message and a second source IP-address of the second user agent comprised in the confirmation message to the NAT-table entry of the controllable NAT, wherein the completion of the NAT-table entry is done by adding a first and a second source port of the first and the second user agent to the NAT-table entry comprised in the very first data exchange between the first and the second user agent via the controllable NAT.

In another preferred embodiment of said invention, at least one user agent is located behind a symmetric NAT.

In a preferred embodiment of said invention the server is a proxy server.

In a particular preferred embodiment of said invention the proxy server is a SIP proxy, wherein the invitation message and the confirmation message are SIP messages.

Another preferred embodiment of said invention the server is characterized in that the connection to be established between the user agents by the invitation and the confirmation message is a peer-to-peer connection.

In a preferred embodiment of said invention the data exchanged between the first and the second user agent comprise a media stream.

In a further preferred embodiment of said invention the media stream comprises a voice stream. The voice stream e.g. allows a first user using the first user agent to talk with a second user using the second user agent. By using the method according to the invention, telephone via Internet is possible for user agents located behind symmetric NATs.

A particular preferred embodiment of said invention is characterized in that at least one user agent is running on a computer. Preferably both user agents are running on computers. It is also thinkable, that one of the user agents is running on a Personal Digital Assistant, PDA or the like.

It is also thinkable that instead of the server the controllable NAT itself generates a new NAT-table entry comprising a first and a second public IP-address:Port pair, wherein the controllable NAT communicates said first and second public IP-address:Port pair to the server for replacing the first and the second destination IP-address:Port pair in the invitation message and in the confirmation message with the first and the second public IP-address:Port pair.

In another preferred embodiment of the invention, said method is performed by a computer program product stored on a computer usable medium comprising computer readable program means for causing a computer to perform the method mentioned above, when said computer program product is executed on a computer.

### Brief description of the drawing, with

- Figure 1: showing a scheme of an arrangement to be used to execute the method according to the invention before a connection is established,
- Figure 2: showing the arrangement of Fig. 1 after a connection has been established,
- Figure 3: showing an example for a full cone NAT,
- Figure 4: showing an example for a Restricted Cone NAT,
- Figure 5: showing an example for a Port Restricted Cone NAT, and
- Figure 6: showing an example for a symmetric NAT.

### Paths for performing the invention:

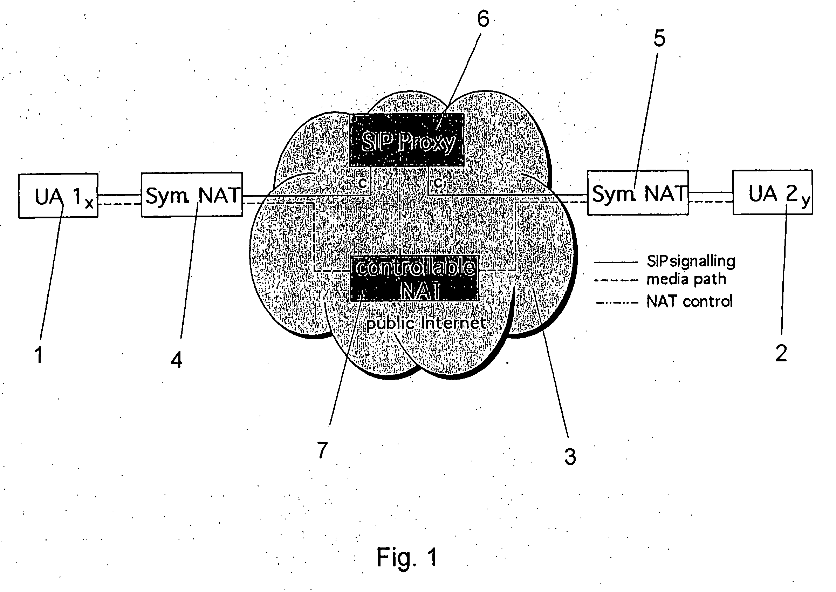

As shown in Figure 1, a first 1 and a second user agent 2 are connected with the Internet 3. Both user agents 1, 2 are located behind symmetric NATs 4, 5. A proxy server 6 is located in the Internet 3. Also a controllable NAT 7 is located in the Internet. The controllable NAT 7 can be controlled by the proxy server 6, wherein the proxy server 6 is able to generate entries in the NAT-table of the controllable NAT 7.

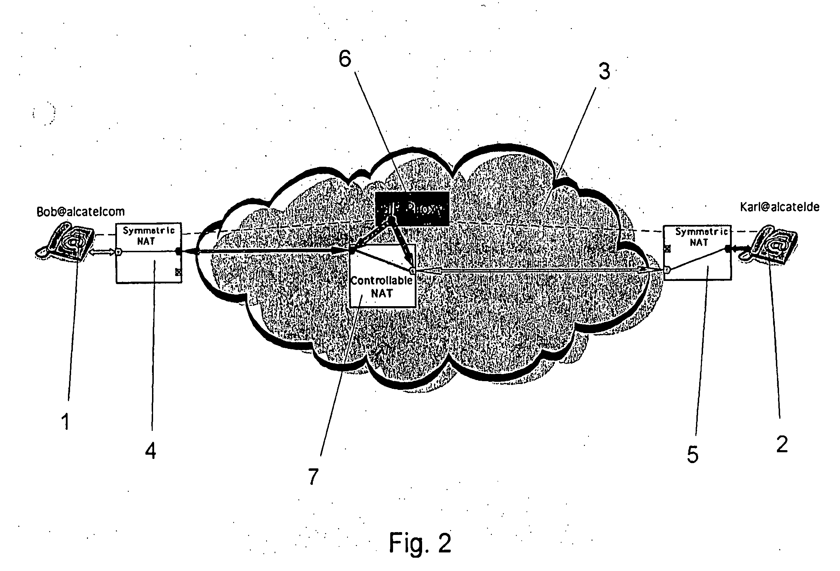

Figure 2 shows the situation when a peer-to-peer connection is established between the two user agents 1, 2 via the controllable NAT 7. The procedure to establish this connection is the following:
Both user agents 1 and 2 are registered at the proxy server 6. The first user agent 1 wants to establish a connection with the second user agent 2. To do this, an invitation message is sent from the first user agent 1 to the proxy server 6. This invitation message comprises a first destination IP-address:port pair to which the second user agent 2 shall reply. Since the first user agents 1 is located behind the symmetric NAT 4, a reply from the second user agent 2 to the first user agent 1 addressed to the first destination IP-address:port pair would be dropped at the symmetric NAT 4. To solve this problem, the proxy server 6 examines the invitation message and searches this first destination IP-address:port pair. The proxy server 6 replaces the first destination IP-address:port pair in the invitation message with a first public IP-address:port pair and forwards this changed invitation message to the second user agent 2 via the hole in the symmetric NAT 5 that has been generated with the registration of the second user agent 2 at the proxy server 6. At the same time the proxy server also generates a NAT-table entry in the controllable NAT 7. This NAT-table entry comprises the first public IP-address:port pair and a second public IP-address:port pair. The second user agent 2 receives the invitation message and extracts the first public IP-address:port pair out of said message. The second user agent 2 uses the first public IP-address:port pair to configure the destination address for all data packets, e.g. a data stream, sent to the first user agent 1. Then, the second user agent 2 generates a confirmation message and is sending this confirmation message to the proxy server 6. This confirmation message comprises a second destination IP-address:port pair to which the first user agent 1 shall reply. Since the second user agents 1 is located behind the symmetric NAT 5, a reply from the first user agent 1 to the second user agent 2 addressed to the second destination IP-address:port pair would be dropped at the symmetric NAT 5. To solve this problem, the proxy server 6 also replaces the second destination IP-address:port pair in the confirmation message with the second public IP-address:port pair and forwards this changed confirmation message to the first user agent 1 via the hole in the symmetric NAT 4 that has been generated with the registration of the first user agent 1 at the proxy server 6. The first user agent 1 receives the confirmation message and extracts the second public IP-address:port pair out of said message. The first user agent 1 uses the second public IP-address:port pair to configure the destination address for all data packets, e.g. a data stream, sent to the second user agent 2.

Now the first 1 and the second user agent 2 can communicate with each other via the controllable NAT. To complete the NAT-table entry in the controllable NAT 7, a first source IP-address:port pair is extracted from the very first data sent from the first user agent 1 to the second user agent 2 and a second source IP-address:port pair is extracted from the very first data sent from the second user agent 2 to the first user agent 1. The extraction of these source IP-address:port pairs is done by the controllable NAT. The first and the second source IP-address:port pair are inserted into the NAT-table entry of the controllable NAT. By doing so, the NAT-table entry of the controllable NAT considering the session between the first 1 and the second user agent 2 is completed.

It is important to mention that in Fig. 1 and 2 only a single controllable NAT 7 is shown to keep the figures concise, but the concept allows also arranging several controllable NATs in the Internet 3. In general the proxy server 6 is aware of several controllable NATs, so that it can distribute the load between different controllable NATs to prevent hot spots in the network as well as to rearrange media session paths through the Internet to overcome e.g. error situations, network quality of services degradations and the like. The concept is extendible towards a quality of services controlled load balancing system with data load accounting per media session.

In an alternative embodiment of the invention, the controllable NAT itself generates its NAT-table entries comprising public IP-address:port pairs. The controllable NAT communicates these public IP-address:port pairs to the proxy server. The proxy server uses these public IP-address:port pairs to replace the destination IP-address:port pairs in the invitation message and in the confirmation message. This embodiment differs from the example described above thereby, that instead of the proxy server the controllable NAT itself generates the NAT-table entry comprising public IP-address:port pairs. In order that the proxy server knows which public IP-address:port pairs can be used to replace the destination IP-address:port pairs in the invitation message and in the confirmation message, the public IP-address:port pairs comprised in the NAT-table entry generated by the controllable NAT are communicated from the controllable NAT to the proxy server.

### Commercial applicability:

The invention is commercially applicable particularly in the field of production and operation of networks to be used for Internet traffic.

## Claims

1. Method to establish an Internet connection between a first (1) and a second (2) user agent, where a NAT-table entry in a controllable NAT (7) located in the Internet (3) is generated, wherein said NAT-table entry comprises public IP-address:Port pairs that are communicated to the user agents (1, 2), wherein the user agents (1, 2) use said public IP-address:port pairs for establishing an Internet connection between each other via the controllable NAT (7),the method comprising the steps of
- registration of both user agents (1, 2) at a server (6),
- sending an invitation message to establish a connection with the second user agent (2) from the first user agent (1) to the server (6), wherein said invitation message comprises a first destination IP-address:Port pair,
- generation of a NAT-table entry in a controllable NAT (7) located in the Internet (3) by the server (6), wherein said NAT-table entry comprises a first and a second public IP-address:Port pair,
- replacing the first destination IP-address:Port pair within the invitation message with the first public IP-address:Port pair by the server (6) and
- sending the changed invitation message from the server (6) to the second user agent (2),
- receiving the changed invitation message by the second user agent (2) and extracting the first public IP-address:Port pair out of said invitation message,
- sending a confirmation message from the second user agent (2) to the server (6), wherein said confirmation comprises a second destination IP-address:Port pair,
- replacing the second destination IP-address:Port pair within the confirmation message with the second public IP-address:Port pair by the server (6),
- sending the changed confirmation message comprising the second public IP-address:Port pair from the server (6) to the first user agent (1) and
- receiving the changed confirmation message by the first user agent (1) and extracting the second public IP-address:Port pair out of said confirmation message,
exchanging data between the first (1) and the second user agent (2) via the
controllable NAT (7), wherein the first user agent (1) addresses to the second public IP-address:Port pair and wherein the second user agent (2) addresses to the first public IP-address:Port pair,
**characterized In that** the server (6) after receiving the confirmation message from the second user agent (2) adds a first source IP-address of the first user agent (1) comprised in the invitation message and a second source IP-address of the second user agent (2) comprised in the confirmation message to the NAT-table entry, and **in that** the completion of the NAT-table entry is done by adding a first and a second source port of the first (1) and the second user agent (2) to the NAT-table entry comprised in the very first data exchange between the first (1) and the second user agent (2) via the configurable NAT (7).

2. Method according to claim 1,
**characterized in**
**that** at least one user agent (1, 2) is located behind a symmetric NAT (4, 5).

3. Method according to claim 1 or 2,
**characterized in**
**that** the server is a proxy server (6).

4. Method according to claim 3,
**characterized in**
**that** the proxy server (6) is a SIP proxy, wherein the invitation message and the confirmation message are SIP messages.

5. Method according to one of the previous claims,
**characterized in**
**that** the connection is a peer-to-peer connection.

6. Method according to one of the previous claims,
**characterized in**
**that** the data exchanged between the first (1) and the second user agent (2) comprise a media stream.

7. Method according to claim 6,
**characterized in**
**that** the media stream comprises a voice stream.

8. Method according to one of the previous claims,
**characterized in**
**that** at least one user agent (1, 2) is running on a computer.

9. Computer program product comprising computer readable program means for causing a computer to perform the method of anyone of the previous claims, when said computer program product is executed on a computer.

## Patentansprüche

1. Verfahren zum Aufbauen einer Internet-Verbindung zwischen einem ersten (1) und einem zweiten (2) Nutzeragenten, wobei ein NAT-Tabelleneintrag in einem im Internet (3) angeordneten steuerbaren NAT (7) erzeugt wird, wobei der besagte NAT-Tabelleneintrag öffentliche IP-Adressen:Port-Paare, welche an die Nutzeragenten (1, 2) mitgeteilt werden, umfasst, wobei die Nutzeragenten (1, 2) die besagten öffentlichen IP-Adressen:Port-Paare für den Aufbau einer Internet-Verbindung untereinander über den steuerbaren NAT (7) verwenden, wobei das Verfahren die folgenden Schritte umfasst:
- Registrieren beider Nutzeragenten (1, 2) bei einem Server (6),
- Senden einer Einladungsnachricht für den Aufbau einer Verbindung mit dem zweiten Nutzeragenten (2) durch den ersten Nutzeragenten (1) an den Server (6), wobei die besagte Einladungsnachricht ein erstes Ziel-IP-Adressen:Port-Paar enthält,
- Erzeugen eines NAT-Tabelleneintrags in einem im Internet (3) angeordneten steuerbaren NAT (7) durch den Server (6), wobei der besagte NAT-Tabelleneintrag ein erstes und ein zweites öffentliches IP-Adressen:Port-Paar umfasst,
- Ersetzen des ersten Ziel-IP-Adressen:Port-Paars in der Einladungsnachricht durch das erste öffentliche IP-Adressen:Port-Paar durch den Server (6), und
- Senden der geänderten Einladungsnachricht von dem Server (6) an den zweiten Nutzeragenten (2),
- Empfangen der geänderten Einladungsnachricht an dem zweiten Nutzeragenten (2), und Extrahieren des ersten öffentlichen IP-Adressen:Port-Paars aus der besagten Einladungsnachricht,
- Senden einer Bestätigungsnachricht von dem zweiten Nutzeragenten (2) an den Server (6), wobei die besagte Bestätigung ein zweites Ziel-IP-Adressen:Port-Paar umfasst,
- Ersetzen des zweiten Ziel-IP-Adressen:Port-Paars innerhalb der Bestätigungsnachricht durch das zweite Ziel-IP-Adressen:Port-Paar durch den Server (6),
- Senden der geänderten Bestätigungsnachricht mit dem zweiten öffentlichen IP-Adressen:Port-Paar von dem Server (6) an den ersten Nutzeragenten (1), und
- Empfangen der geänderten Bestätigungsnachricht an dem ersten Nutzeragenten (1), und Extrahieren des zweiten öffentlichen IP-Adressen:Port-Paar saus der besagten Bestätigungsnachricht,
- Austauschen von Daten zwischen dem ersten (1) und dem zweiten (2) Nutzeragenten über den steuerbaren NAT (7), wobei der erste Nutzeragent (1) das zweite öffentliche IP-Adressen:Port-Paar adressiert, und wobei der zweite Nutzeragent (2) das erste öffentliche IP-Adressen:Port-Paar adressiert, **dadurch gekennzeichnet, dass** der Server (6) nach Empfang der Bestätigungsnachricht von dem zweiten Nutzeragenten (2) eine erste Quell-IP-Adresse des ersten Nutzeragenten (1), welche in der Einladungsnachricht enthalten ist, und eine zweite Quell-IP-Adresse des zweiten Nutzeragenten (2), welche in der Bestätigungsnachricht enthalten ist, zum NAT-Tabelleneintrag hinzufügt, und dass die Vervollständigung des NAT-Tabelleneintrags durch Hinzufügen eines ersten und eines zweiten Quell-Ports des ersten (1) und des zweiten (2) Nutzeragenten zu dem NAT-Tabelleneintrag, welcher in dem allerersten Datenaustausch zwischen dem ersten (1) und dem zweiten Nutzeragenten (2) enthalten ist, über die konfigurierbare NAT (7) erfolgt.

2. Verfahren nach Anspruch 1,
**dadurch gekennzeichnet,**
**dass** mindestens ein Nutzeragent (1, 2) hinter einem symmetrischen NAT (4, 5) angeordnet ist.

3. Verfahren nach Anspruch 1 oder 2,
**dadurch gekennzeichnet,**
**dass** der Server ein Proxy-Server (6) ist.

4. Verfahren nach Anspruch 3,
**dadurch gekennzeichnet,**
**dass** der Proxy-Server (6) ein SIP-Proxy ist, wobei die Einladungsnachricht und die Bestätigungsnachricht SIP-Nachrichten sind.

5. Verfahren nach einem der vorstehenden Ansprüche,
**dadurch gekennzeichnet,**
**dass** die Verbindung eine Peer-zu-Peer-Verbindung ist.

6. Verfahren nach einem der vorstehenden Ansprüche,
**dadurch gekennzeichnet,**
**dass** die zwischen dem ersten (1) und dem zweiten (2) Nutzeragenten ausgetauschten Daten einen Mediendatenstrom umfassen.

7. Verfahren nach Anspruch 6,
**dadurch gekennzeichnet,**
**dass** der Mediendatenstrom einen Sprachdatenstrom umfasst.

8. Verfahren nach einem der vorstehenden Ansprüche,
**dadurch gekennzeichnet,**
**dass** mindestens ein Nutzeragent (1, 2) auf einem Computer läuft.

9. Computerprogramm-Produkt mit computerlesbaren Programmmitteln, welche bewirken, dass ein Computer das Verfahren eines beliebigen der vorstehenden Ansprüche durchführt, wenn das besagte Computerprogramm-Produkt auf einem Computer ausgeführt wird.

## Revendications

1. Procédé pour établir une connexion Internet entre un premier agent utilisateur (1) et un deuxième agent utilisateur (2), où une entrée de table NAT dans une NAT pouvant être commandée (7) localisée sur Internet (3) est générée, dans lequel ladite entrée de table NAT comprend des paires adresse IP publique:Port qui sont communiquées aux agents utilisateurs (1, 2), dans lequel les agents utilisateurs (1, 2) utilisent lesdites paires adresse IP publique:Port pour établir une connexion Internet entre eux par l'intermédiaire de la NAT pouvant être commandée (7), le procédé comprenant les étapes suivantes
- enregistrement des deux agents utilisateurs (1, 2) dans un serveur (6),
- envoi d'un message d'invitation pour établir une connexion avec le deuxième agent utilisateur (2) entre le premier agent utilisateur (1) et le serveur (6), ledit message d'invitation comprenant une première paire adresse IP de destination:Port,
- génération d'une entrée de table NAT dans une NAT pouvant être commandée (7) localisée sur Internet (3) au moyen du serveur (6), ladite entrée de table NAT comprenant une première et une deuxième paires adresse IP publique:Port,
- remplacement de la première paire adresse IP de destination:Port dans le message d'invitation par la première paire adresse IP publique:Port au moyen du serveur (6) et
- envoi du message d'invitation modifié à partir du serveur (6) vers le deuxième agent utilisateur (2).
- réception du message d'invitation modifié par le deuxième agent utilisateur (2) et extraction de la première paire adresse IP publique:Port dudit message d'invitation,
- envoi d'un message de confirmation à partir du deuxième agent utilisateur (2) vers le serveur (6), ladite confirmation comprenant une deuxième paire adresse IP de destination:Port,
- remplacement de la deuxième paire adresse IP de destination:Port dans le message de confirmation par la deuxième paire adresse IP publique:Port au moyen du serveur (6),
- envoi du message de confirmation modifié comprenant la deuxième paire adresse IP publique:Port à partir du serveur (6) vers le premier agent utilisateur (1) et
- réception du message de confirmation modifié par le premier agent utilisateur (1) et extraction de la deuxième paire adresse IP publique:Port dudit message de confirmation,
échange des données entre le premier agent utilisateur (1) et le deuxième agent utilisateur (2) par l'intermédiaire de la NAT pouvant être commandée (7), le premier agent utilisateur (1) adressant la deuxième paire adresse IP publique:Port et le deuxième agent utilisateur (2) adressant la première paire adresse IP publique:Port, **caractérisé en ce que** le serveur (6), après avoir reçu le message de confirmation par le deuxième agent utilisateur (2), ajoute une première adresse IP source du premier agent utilisateur (1) contenue dans le message d'invitation et une deuxième adresse IP source du deuxième agent utilisateur (2) contenue dans le message de confirmation à l'entrée de table NAT, et **en ce que** l'entrée de table NAT est complétée en ajoutant un premier port source et un deuxième port source du premier agent utilisateur (1) et du deuxième agent utilisateur (2) à l'entrée de table NAT contenue dans le tout premier échange de données entre le premier agent utilisateur (1) et le deuxième agent utilisateur (2) par l'intermédiaire de la NAT configurable (7).

2. Procédé selon la revendication 1,
**caractérisé en ce que**
au moins un agent utilisateur (1, 2) est localisé derrière une NAT symétrique (4, 5).

3. Procédé selon la revendication 1 ou 2,
**caractérisé en ce que**
le serveur est un serveur mandataire (6).

4. Procédé selon la revendication 3,
**caractérisé en ce que**
le serveur mandataire (6) est un mandataire SIP, dans lequel le message d'invitation et le message de confirmation sont des messages SIP.

5. Procédé selon l'une des revendications précédentes,
**caractérisé en ce que**
la connexion est une connexion poste à poste.

6. Procédé selon l'une des revendications précédentes,
**caractérisé en ce que**
les données échangées entre le premier agent utilisateur (1) et le deuxième agent utilisateur (2) comprennent un flux multimédia.

7. Procédé selon la revendication 6,
**caractérisé en ce que**
le flux multimédia comprend un flux vocal.

8. Procédé selon l'une des revendications précédentes,
**caractérisé en ce que**
au moins un agent utilisateur (1, 2) est exécuté sur un ordinateur.

9. Produit de programme informatique comprenant des moyens de programme lisibles par un ordinateur pour entraîner l'exécution par un ordinateur du procédé selon l'une quelconque des revendications précédentes, lorsque ledit produit de programme informatique est exécuté sur un ordinateur.
